# EUROPÄISCHE PATENTANMELDUNG

(11) **EP 3 757 396 A1**
(43) Veröffentlichungstag der Anmeldung: **30.12.2020**
(21) Anmeldenummer: 20170808.8
(22) Anmeldetag: 22.04.2020
(51) Int. Cl.: F04D 15/00, F04D 15/02, F24F 11/83, F24F 11/84, F24F 11/85

(54) **VERFAHREN UND SYSTEM ZUR REGELUNG EINES MEDIENPARAMETERS DES MEDIUMS AUF DER SEKUNDÄRSEITE EINES WÄRMEÜBERTRAGERS**

(30) Priorität: 27.06.2019 DE 102019117378
(71) Anmelder: WILO SE, 44263 Dortmund (DE); Rheinisch-Westfälische Technische Hochschule (RWTH) Aachen, 52062 Aachen (DE)
(72) Erfinder: Oppermann, Jens, 44263 Dortmund (DE); Teichmann, Jens, 53113 Bonn (DE); Kümpel, Alexander, 52064 Aachen (DE); Mathis, Paul, 52355 Düren (DE)
(74) Vertreter: Cohausz Hannig Borkowski Wißgott

(57) **Zusammenfassung**

Die Erfindung betrifft ein Verfahren zur Regelung eines Medienparameters, insbesondere der Temperatur des Mediums auf der Sekundärseite eines Wärmeübertragers (8), bei dem mit einer Pumpe (5) in einem Primärkreislauf (1) des Wärmeübertragers (8) ein Wärmeträgermedium durch den Wärmeübertrager (8) gefördert und mit diesem das Medium der Sekundärseite temperiert wird, wobei die Medienparameter-Regelung mittels einer Änderung der Drehzahl der Pumpe (5) als Stellgröße der Regelung erfolgt, wobei beim Unterschreiten oder Erreichen eines vorgegebenen unteren Grenzwertes bei einer Absenkung der Drehzahl der Pumpe (5) eine der Absenkung entgegenwirkende Änderung eines Betriebsparameters des Primärkreislaufes (1) ausgelöst wird, insbesondere mit der eine Absenkung der Pumpendrehzahl bis zu einer Minimaldrehzahl verhindert wird. Die Erfindung betrifft auch ein System zur Regelung eines Medienparameters des sekundärseitigen Mediums eines Wärmeübertragers (8).

## Beschreibung

Die Erfindung betrifft ein Verfahren und ein System zur Regelung eines Medienparameters des Mediums auf der Sekundärseite eines Wärmeübertragers, bei dem mit einer Pumpe in einem Primärkreislauf des Wärmeübertragers ein Wärmeträgermedium durch den Wärmeübertrager gefördert und mit diesem das Medium der Sekundärseite temperiert wird, wobei die Medienparameter-Regelung mittels einer Änderung der Drehzahl der Pumpe als Stellgröße der Regelung erfolgt.

Im Stand der Technik ist es allgemein bekannt, mittels eines Wärmeübertragers Wärme zwischen einem Wärmeträgermedium auf dessen Primärseite und einem Medium auf dessen Sekundärseite zu übertragen. Ein Wärmeübertrager kann z.B. ein Plattenwärmetauscher sein, beispielsweise wenn die Medien auf Primär- und Sekundärseite jeweils Flüssigkeiten sind. Ein Wärmeübertrager kann auch ein sogenanntes Heiz- oder Kühlregister oder ein Konvektor sein. In einem solchen Fall ist das Medium auf der Primärseite üblicherweise eine Flüssigkeit und das auf der Sekundärseite üblicherweise ein Gas, insbesondere Luft.

Die Übertragungsrichtung kann bei der Temperierung des Mediums der Sekundärseite beliebig sein. Bei Heizanwendungen wird üblicherweise Energie von der Primärseite auf die Sekundärseite übertragen und bei einer Kühlanwendung umgekehrt. Dafür wird üblicherweise mit einer Pumpe das Wärmeträgermedium, wie z.B. häufig eine Flüssigkeit, bevorzugt Wasser oder ein Wasser/Glykol-Gemisch auf der Primärseite aktiv mit wenigstens einer Pumpe im Kreis gefördert, z.B. im Kreislauf durch ein Heiz- oder Kühlgerät gefördert.

Auch auf der Sekundärseite kann das Medium, z.B. eine Flüssigkeit, wie beispielsweise Wasser oder auch ein gasförmiges Medium, z.B. Luft aktiv gefördert werden. So wird eine Flüssigkeit üblicherweise mit wenigstens einer Pumpe und Luft mit wenigstens einem Ventilator gefördert. Die Förderung des Mediums auf der Sekundärseite kann aber auch rein durch Konvektion erfolgen. Typische, auch erfindungsgemäße Anwendungen sind die Beheizung oder Kühlung von Räumen eines Gebäudes. Die Erfindung bezieht sich ebenso auf diese Anwendungen, insbesondere die Temperierung von Luft auf der Sekundärseite.

Die Temperierung des Mediums auf der Sekundärseite erfolgt geregelt, wobei z.B. als geregelter Medienparameter bevorzugt die Temperatur des Mediums der Sekundärseite herangezogen wird. Als alternative Medienparameter sind z.B. auch die Feuchte (insbesondere relative Luftfeuchte) des Mediums oder die Enthalpie des Mediums, insbesondere bei adiabatischer Befeuchtung, bevorzugt mit geregelten Düsen, verwendbar. Der gewählte Medienparameter kann mittels eines Sensors vom Medium der Sekundärseite erfasst werden und der Regelung zur Verfügung gestellt werden. Die Regelung vergleicht den erfassten Medienparameter mit einem Sollwert und stellt bei einer Abweichung eine die Abweichung verringernde Stellgröße zur Verfügung. Beispielsweise wirkt die Stellgröße auf ein Stellmittel im Primärkreislauf.

Üblicherweise wird die Regelung durch eine Elektronik und/oder ein Programm in einer Regeleinheit ausgeführt. Der Regeleinheit werden der gemessene sekundärseitige Medienparameter und ein zu erreichender Sollwert des Medienparameters vorgegeben, wonach die Regeleinheit - auch einfach Regler genannt - eine die Abweichung zwischen Sollwert und aktuellem Medienparameter verringernde Stellgröße ermittelt, z.B. berechnet und an das Stellmittel übermittelt. Das Stellmittel wird üblicherweise durch einen Aktor im Primärkreislauf ausgebildet. Die Erfindung macht bevorzugt von diesem Vorgehen ebenso Gebrauch.

Häufig erfolgt im Stand der Technik eine Regelung derart, dass mittels einer Pumpe eine Druckdifferenz im Primärkreislauf erzeugt wird und im Primärkreislauf mit einem Drosselventil als Stellmittel der Volumenstrom des Wärmeträgermediums in Abhängigkeit des auf der Sekundärseite beobachteten Medienparameters geändert wird. Die Stellgröße kann z.B. die Stellung eines Ventilstellgliedes des Drosselventils sein, die z.B. durch ein Ausdehnungselement bestimmt sein kann oder auch numerisch einem Aktor vorgegeben wird, welcher das Ventilstellglied bewegt.

Drosselventile werden dabei mit einer Ventilautorität zwischen 0,3 und 0,7 betrieben, insbesondere was den Anteil des Druckverlustes, der durch das geöffnete Ventil erzeugbar ist, in Relation zum Gesamtdruckverlust im Rohrsystem bei geöffnetem Ventil beschreibt. Für eine hohe Regelgüte wird die Ventilautorität im eher oberen Bereich gewählt, was hingegen energetisch ungünstig ist. Bei dieser Ausführung wird somit der Energieübertrag im Wärmeübertrager zwischen dessen beiden Seiten zumindest überwiegend durch die Ventilstellung beeinflusst. Solche Regelungen sind z.B. bei Heizkörpern bekannt.

Diese Art der Regelung ist energetisch sehr ineffizient, da die von der Pumpe aufgebrachte Energie zur Erzeugung der Druckdifferenz durch das Drosselventil zum großen Teil ungenutzt vernichtet wird.

Weiterhin ist es bekannt eine Regelung so vorzunehmen, dass eine Pumpe in einer festen Betriebsart betrieben wird und die Temperatur des Mediums im Primärkreis geändert wird. Auch dies ist ineffizient, da die Pumpe auch bei geringen Leistungsanforderungen in der festen Betriebsart verbleibt.

Ein anderer bekannter Ansatz ist es, die Regelung des Medienparameters vorzunehmen unter Änderung der Drehzahl der Pumpe im Primärkreislauf, also über eine Drehzahländerung den Volumenstrom zu ändern in Abhängigkeit des beobachteten Medienparameters. Diese Art der Regelung ist grundsätzlich effizienter, da sie zu einem eher bedarfsabhängigen Energieverbrauch auf der Primärseite führt. Der Energieübertrag im Wärmetauscher wird hier überwiegend durch die Änderung der Pumpendrehzahl bewirkt.

Problematisch ist dabei aber, dass Pumpen eine Minimaldrehzahl haben, z.B. eine bauartbedingte Minimaldrehzahl. Bei der Minimaldrehzahl kann es sich um eine solche Betriebsdrehzahl größer Null U/min (Ausschaltstellung) handeln, unter der die betrachtete Pumpe nicht betrieben werden kann oder zumindest nicht betrieben werden soll. Beispielsweise kann eine Elektronik der Pumpe das Unterschreiten dieser Minimaldrehzahl nicht zulassen, z.B. auch dann, wenn eine niedrigere Drehzahl angesteuert wird, z.B. durch eine externe Steuergröße. Bei einer solchen Minimaldrehzahl kann der geförderte Volumenstrom zu hoch sein, so dass kleine Leistungsanforderungen nicht bedient werden können, da die übertragene Wärmeleistung bei dieser Minimaldrehzahl größer wäre als die angeforderte Leistung. Im Kleinlastbereich kann daher mit diesem Konzept nicht geregelt werden.

Aufgabe der Erfindung ist es, eine gegenüber diesem Stand der Technik energetisch effizienterer Regelung eines Medienparameters unter Nutzung des grundsätzlichen Verfahrensprinzips der Änderung der Drehzahl einer Pumpe zur Erzielung einer Volumenstromänderung, bzw. eines geänderten Energieübertrags im Wärmeübertrager bereitzustellen. Weiterhin ist es eine Aufgabe auch eine Regelung im unteren Teillastbetrieb sowie eine schnelleres Ansprechverhalten zu erreichen.

Diese Aufgabe wird erfindungsgemäß dadurch gelöst, dass, insbesondere bei der Vorgabe der Drehzahlstellgröße an die Pumpe durch einen Regler der Medienparameterregelung, beim Unterschreiten oder Erreichen eines vorgegebenen unteren Grenzwertes bei einer Absenkung der Drehzahl der Pumpe eine der Absenkung entgegenwirkende Änderung eines Betriebsparameters des Primärkreislaufes ausgelöst wird.

Bevorzugt wird somit durch die ausgelöste Änderung eines Betriebsparameters eine weitere Absenkung der Pumpendrehzahl, insbesondere eine weitere Absenkung bis zur Minimaldrehzahl verhindert. Es wird also bevorzugt bei der erfindungsgemäßen Regelung die Minimaldrehzahl, die wie eingangs erwähnt, z.B. bauartbedingt vorgegeben ist, nicht erreicht, sondern die Pumpe immer über dieser Minimaldrehzahl betrieben, z.B. auch über einem nach unten nicht zu unterschreitenden Drehzahlgrenzwert, welcher die Minimaldrehzahl sein kann oder auch größer als diese sein kann.

Als zu überwachender Grenzwert können mehrere Systemparameter in Frage kommen. Der Systemparameter kann dabei ein am System erfassbarer Wert sein, z.B. ein an der Primärseite oder an der Sekundärseite oder an beiden Seiten erfassbarer Wert. Einige bevorzugte Systemparameter werden nachfolgend benannt.

Eine mögliche Ausführung kann es z.B. vorsehen, dass als unterer Grenzwert ein unterer Drehzahlgrenzwert überwacht wird. Dies ist ein Systemparameter, der nur an der Primärseite erfasst wird. So bewirkt die Erfindung in diesem Fall, dass dann, wenn durch die Regelung eine Absenkung der Drehzahl erfolgt, das Unterschreiten oder Erreichen dieses unteren Drehzahlgrenzwertes überwacht wird und, wenn das Unterschreiten oder Erreichen detektiert wird, die genannte der Absenkung entgegenwirkende Änderung eines Betriebsparameters getriggert, also ausgelöst wird.

Zwar kann, z.B. aufgrund einer Systemträgheit in dieser Ausführung der untere Drehzahlgrenzwert an der Pumpe noch unterschritten werden, die entgegenwirkende Änderung bewirkt aber zumindest, das die Absenkung der Drehzahl zumindest vor Erreichen der Minimaldrehzahl beendet wird.

Der benannte untere Drehzahlgrenzwert der Pumpe ist dabei ein Drehzahlwert, der über der Minimaldrehzahl, z.B. der bauartbedingten Minimaldrehzahl liegt, bei der die Pumpe im gegebenen Primärkreislauf einen zu hohen Volumenstrom fördern würde und damit geringe Leistungsanforderung nicht bedienen könnte.

Eine andere Ausführung kann auch vorsehen, dass als unterer Grenzwert ein Differenzwert zwischen der aktuellen Pumpendrehzahl und einem nach unten nicht zu unterschreitenden Drehzahlgrenzwert überwacht wird. Insbesondere kann so erzielt werden, dass die Pumpe immer mit einer Drehzahl größer als der nicht zu unterschreitende Drehzahlgrenzwert betrieben wird, wofür durch den genannten Differenzwert ein genügend großer Abstand von dem nicht zu unterschreitenden Drehzahlgrenzwert definiert wird, ab dessen Unterschreiten oder Erreichen die erfindungsgemäße Betriebsparameteränderung ausgelöst wird. Die Änderung des Betriebsparameters wird somit bereits ausgelöst, wenn der nicht zu unterschreitende Drehzahlgrenzwert noch nicht erreicht ist, sondern die aktuelle Pumpendrehzahl um den Differenzwert dazu beabstandet ist.

Der Differenzwert kann z.B. so bemessen sein, dass unter Berücksichtigung einer Systemträgheit die Entgegenwirkung zur Absenkung das Unterschreiten des unteren Drehzahlgrenzwertes verhindert wird.

In weiterer Ausführung kann der untere Grenzwert ein unterer Leistungsanforderungswert sein. Dieser kann z.B. ermittelt werden aus der Eingangstemperatur des sekundärseitigen Mediums vor dem Wärmetauscher, dem Volumenstrom des sekundärseitigen Mediums und einer Solltemperatur des sekundärseitigen Mediums. Dieser Systemparameter ist somit ein sekundärseitiger Parameter. So kann z.B. im System hinterlegt sein, dass Leistungen unterhalb des unteren Leistungsanforderungswertes nicht bedient werden können/sollen, z.B. ohne die Drehzahl der Pumpe in Richtung zur Minimaldrehzahl oder einer anderen nicht zu unterschreitenden unteren Drehzahlgrenze abzusenken.

Die erfindungsgemäße, durch die vorgenannte Überwachung ausgelöste Änderung des Betriebsparameters bewirkt erfindungsgemäß, dass durch die Regelung, die mit wenigstens einem Regler implementiert sein kann, zeitlich mit der Änderung oder zeitlich nach der Änderung des Betriebsparameters die Drehzahlstellgröße für die Pumpe, die von einem Regler an die Pumpe bereitgestellt wird, auf einen größeren Wert eingestellt wird, insbesondere einen Wert größer als vor der Auslösung der Änderung, um den Sollwert des beobachteten Medienparameters (weiterhin) einzuhalten. Bevorzugt wird mit der Änderung bewirkt, dass nach Durchführung der Änderung der zuvor überwachte Grenzwert wieder eingehalten wird. Z.B. kann mit Bezug auf die vorgenannten Beispiele die Drehzahlstellgröße so eingestellt werden, dass nach der Einstellung die Drehzahl größer gleich ist als der überwachte untere Drehzahlgrenzwert oder der überwachte Differenzwert oder der überwachte untere Leistungsanforderungswert erreicht oder überschritten werden.

Bevorzugt wird faktisch so erzielt, dass durch die Änderung des Betriebsparameters der Wärmeübertrag (richtungsunabhängig betrachtet, also dessen vorzeichenbereinigter Betragswert) im Wärmeübertrager bei ungeänderter oder zumindest als ungeändert angenommener Pumpendrehzahl im Augenblick der Auslösung der Änderung reduziert wird und sodann durch die Regelung bzw. durch den Regler mittels einer Erhöhung der Pumpendrehzahl der Volumenstrom im Primärkreislauf vergrößert und dadurch der Wärmeübertrag wieder erhöht wird, insbesondere die vorherige, durch die Änderung bewirkte Reduktion des Wärmübertrags verringert, bevorzugt zumindest kompensiert wird.

Insbesondere liegt diesem erfindungsgemäßen Ansatz die Überlegung zugrunde, den durch die vorgenannte Änderung eines Betriebsparameters noch unbeeinflussten Primärkreislauf so auszulegen, dass die für die Regelung benötigten primärseitigen Volumenströme, um im Wärmeübertrager einen benötigten Energieübertrag zu erzielen, in dem unbeeinflussten Primärkreislauf nicht alleinig durch eine Drehzahländerung der Pumpe, z.B. nicht alleinig durch eine Drehzahlabsenkung erzielt werden können. Der unbeeinflusste Primärkreislauf ist also ein solcher, bei dem der Betriebsparameter, der gemäß der Erfindung einer Änderung unterliegt, noch ungeändert ist, der Betriebsparameter somit z.B. einen vorgegebenen Auslegungswert oder Startwert hat, von dem aus die Änderung erfolgt.

Erfolgt beispielsweise die Auslegung so, dass im unbeeinflussten Primärkreislauf Volumenströme in einem Intervall zwischen einem Minimalvolumenstrom und einen Maximalvolumenstrom benötigt würden, insbesondere um ein gewünschtes Regelverhalten oder einen gewünschten Energieübertrag zu erzielen, wobei der Minimalvolumenstrom kleiner ist, als der bei der Minimaldrehzahl vorliegende Volumenstrom, so ergibt sich, dass der Minimalvolumenstrom theoretisch nur erreicht werden könnte, wenn die Minimaldrehzahl der Pumpe unterschritten würde. Diesem Problem begegnet die Erfindung somit mit dem Ansatz bei einer Absenkung der Drehzahl vor Erreichen der Minimaldrehzahl den Wärmeübertrag durch die Änderung des Betriebsparameters weiter zu reduzieren und so die Drehzahl der Pumpe in einem regelbaren Bereich zu halten, insbesondere zumindest über der Minimaldrehzahl, bevorzugt über einer darüber liegenden Grenze.

Die Erfindung kann es auch vorsehen, dass beim Überschreiten oder Erreichen eines vorgegebenen oberen Grenzwertes bei einer Anhebung der Drehzahl der Pumpe eine der Anhebung entgegenwirkende (z.B. einer vorherigen Änderung) entgegengesetzte Änderung des Betriebsparameters ausgelöst wird.

Die Erfindung kann grundsätzlich vorsehen, dass Änderungen des Betriebsparameters ausgehend von einem Auslegungs- oder Startwert in beide Richtungen möglich sind, also den Auslegungswert vergrößernd oder verkleinernd.

Sofern ausgehend von Auslegungswert oder Startwert eine Änderung des Betriebsparameters hingegen nur in eine erste Richtung möglich ist, die einer weiteren Absenkung der Drehzahl der Pumpe entgegenwirkt, kann es vorgesehen sein, dass eine entgegengesetzte Änderung in eine zweite Richtung zum Entgegenwirken einer weiteren Erhöhung der Pumpendrehzahl nur vorgenommen wird, wenn zuvor wenigstens eine Änderung in der ersten Richtung stattgefunden hat, insbesondere ansonsten der überwachte obere Grenzwert überschritten wird.

Insbesondere sofern im Rahmen der erfindungsgemäßen Regelung nach einer vorgenommenen Änderung des Betriebsparameters, ggfs. nach mehrfach vorgenommenen Änderungen des Betriebsparameters in der ersten Richtung, insbesondere mit der der Energieübertrag im Wärmeübertrager zuvor reduziert wurde, der Bedarf an Wärmeübertrag im Wärmeübertrager steigt, was z.B. durch eine Abweichung vom Sollwert des Medienparameters angezeigt sein kann, und zur Bedienung des Bedarfes die Drehzahl der Pumpe durch den Regler angehoben wird, kann also ab Überschreitung des oberen Grenzwertes die entgegengesetzte Änderung in der zweiten Richtung ausgelöst bzw. vorgenommen werden, insbesondere um die weitere Anhebung der Drehzahl durch den Regler zu reduzieren oder zu verhindern.

Bevorzugt kann dabei wenigstens eine vorherige Änderung des Betriebsparameters in der ersten Richtung rückgängig gemacht werden, ggfs. auch direkt mehrere vorherige Änderungen des Betriebsparameters rückgängig gemacht werden. Die entgegengesetzte Änderung des Betriebsparameters in der zweiten Richtung bewirkt somit eine Vergrößerung des Energieübertrags im Wärmeübertrager, ist also derjenigen Änderung entgegengesetzt, die zuvor eine Verringerung des Wärmeübertrags bewirkte. Hiernach bzw. hierdurch wird somit in umgekehrter Wirkweise sodann erfindungsgemäß die Drehzahl der Pumpe nachfolgend reduziert, um den Medienparameter (weiterhin) auf dem Sollwert zu halten.

Auch bei der Überwachung der Überschreitung eines oberen Grenzwertes kann die Erfindung mehrere verschiedene Systemparameter heranziehen.

Eine mögliche Ausführung kann es z.B. vorsehen, dass als oberer Grenzwert ein oberer Drehzahlgrenzwert der primärseitigen Pumpe überwacht wird. So bewirkt die Erfindung in diesem Fall, dass dann, wenn durch die Regelung eine Erhöhung der Drehzahl erfolgt, das Überschreiten oder Erreichen dieses oberen Drehzahlgrenzwertes überwacht wird und, wenn das Überschreiten oder Erreichen detektiert wird, die genannte der Erhöhung entgegenwirkende Änderung eines Betriebsparameters getriggert, also ausgelöst wird.

Zwar kann, z.B. aufgrund einer Systemträgheit in dieser Ausführung der obere Drehzahlgrenzwert an der Pumpe noch überschritten werden, die entgegenwirkende Änderung bewirkt aber zumindest, das die Erhöhung der Drehzahl zumindest vor Erreichen einer Maximaldrehzahl beendet wird. Analog zur Minimaldrehzahl kann die Maximaldrehzahl eine solche sein, welche die Pumpe, z.B. bauartbedingt nicht überschreiten soll/kann.

Eine andere Ausführung kann auch vorsehen, dass als oberer Grenzwert ein Differenzwert zwischen der aktuellen Pumpendrehzahl und einem nach oben nicht zu überschreitenden Drehzahlgrenzwert überwacht wird. Insbesondere kann so erzielt werden, dass die Pumpe überwiegend, bevorzugt immer mit einer Drehzahl kleiner als der nicht zu überschreitende Drehzahlgrenzwert betrieben wird, wofür durch den genannten Differenzwert ein genügend großer Abstand von dem nicht zu überschreitenden Drehzahlgrenzwert definiert wird, ab dessen Überschreiten oder Erreichen die erfindungsgemäße Betriebsparameteränderung ausgelöst wird. Die Änderung des Betriebsparameters wird somit bereits ausgelöst, wenn der nicht zu überschreitende Drehzahlgrenzwert noch nicht erreicht ist, sondern die aktuelle Pumpendrehzahl um den Differenzwert dazu beabstandet ist.

Der Differenzwert kann z.B. so bemessen sein, dass unter Berücksichtigung einer Systemträgheit die Entgegenwirkung das Überschreiten des oberen Drehzahlgrenzwertes verhindert wird.

In weiterer Ausführung kann der obere Grenzwert ein oberer Leistungsanforderungswert sein. Dieser kann wie zuvor schon erwähnt z.B. ermittelt werden aus der Eingangstemperatur des sekundärseitigen Mediums vor dem Wärmetauscher, dem Volumenstrom des sekundärseitigen Mediums und einer Solltemperatur des sekundärseitigen Mediums. So kann z.B. im System hinterlegt sein, dass Leistungen oberhalb des oberen Leistungsanforderungswertes nicht bedient werden können/sollen, z.B. ohne die Drehzahl der Pumpe in Richtung zur Maximaldrehzahl oder einer anderen nicht zu überschreitenden oberen Drehzahlgrenze zu erhöhen.

Die Erfindung kann vorsehen, sofern Änderungen des gewählten Betriebsparameters nicht immer mit demselben Wert vorgenommen werden, den Wert einer jeden Änderung in der ersten Richtung (bei Drehzahlabsenkung) zu speichern, um nachfolgend Änderungen in der entgegengesetzten zweiten Richtung (bei Drehzahlerhöhung) mit demselben Wert der vorherigen Änderung exakt zu kompensieren.

Durch geeignete Wahl von unterem und oberen Grenzwert kann der Betriebsbereich der Drehzahl bei der Pumpe in einem vorbestimmten, z.B. nötigen oder gewünschten Intervall gehalten werden, mit welchen alleine das benötigte Leistungsspektrum nicht bedient werden kann.

Die Änderung des Betriebsparameters in einer ersten Richtung, die ab Unterschreiten oder Erreichen des unteren Grenzwertes ausgelöst wird, aber auch in entgegengesetzter zweiter Richtung, die ab Überschreiten oder Erreichen des oberen Grenzwertes ausgelöst wird, kann jeweils um einen vorbestimmten Wert, z.B. der im Regler gespeichert ist oder der vor der Änderung berechnet wird, vorgenommen werden, bevorzugt wobei der Änderungswert sicherstellt, dass die nach der Änderung eingestellte neue Drehzahl der Pumpe einen gewählten, insbesondere genügenden Abstand zur jeweiligen Grenze bewirkt, insbesondere um einen Regelbereich bis zum erneuten Erreichen der überwachten Grenze zu erschließen, in dem der Regler einen sich ändernden Bedarf an Energieübertrag zumindest zeitweise bedienen kann. Diese neue Drehzahl ist bevorzugt so gewählt, dass sich nach der Änderung ein Abstand des Systemparameters zum überwachten Grenzwert ergibt, der größer ist als 10%, bevorzugt größer als 20% der Differenz von oberen und unteren Grenzwert. Die vorzunehmende Änderung kann beispielsweise auch abhängig sein vom Abstand der aktuellen Drehzahl, die vorliegt, als die Änderung ausgelöst wird, zu einer unteren oder oberen Drehzahlgrenze.

Die Änderung des Betriebsparameters kann auch so bemessen sein, dass die nach der Änderung einzustellende Drehzahl zur Kompensation der Änderung beim Wärmeübertrag einen Systemparameter ergibt, der in der Mitte zwischen dem oberen und dem unteren Grenzwert liegt. So wird sichergestellt, dass nach einer Änderung des Betriebsparameters in beiden Richtung genügend Regelbreite zur Verfügung steht, bevorzugt, da der sich nach der Änderung einstellende Systemparameter immer in der Mitte zwischen dem überwachten unteren und oberen Grenzwert liegt.

Die Erfindung kann auch vorsehen, dass in Abhängigkeit einer vorgenommenen oder vorzunehmenden Änderung des Betriebsparameters, unabhängig von deren Richtung, die damit einhergehende Änderung des Energieübertrags im Wärmeübertrager berechnet wird, z.B. in Abhängigkeit gespeicherter Parameter des geregelten Systems, und direkt eine Drehzahlstellgröße für eine Drehzahl vorausberechnet, vom Regler eingestellt und an die Pumpe übermittelt wird, mit der die Änderung des Energieübertrags reduziert, bevorzugt zumindest theoretisch kompensiert wird. Diese Berechnung kann im Regler implementiert sein, der die Drehzahlstellgröße in Abhängigkeit des Medienparameters vorgibt oder in einem zusätzlichen, z.B. über- oder nebengeordneten Regler oder einer Recheneinheit.

So kann die Regelzeit durch ein initiales direktes Stellen der voraussichtlich benötigten Drehzahl reduziert werden oder ein durch die Änderung des Betriebsparameters bedingtes zumindest zeitweises Abweichen des Medienparameters vom Sollwert vermieden oder reduziert werden.

Die Erfindung kann, sofern die Änderung des Betriebsparameters z.B. eine Änderung des Volumenstroms im Primärkreislauf bewirkt, auch eine Volumenstromregelung umfassen. Deren Volumenstromsollwert kann z.B. bei einer kaskadierten Regelung von einem übergeordneten Regler bereitgestellt werden. Es kann auch der vor der Änderung des Betriebsparameters vorliegende Volumenstrom im Primärkreislauf erfasst wird, z.B. mittels eines Sensors im Primärkreislauf oder aus Pumpenparametern und dieser Volumenstrom als Sollwert übernommen werden, der nach der Änderung des Betriebsparameters eingeregelt wird. Auch dies kann im Regler implementiert sein, der die Drehzahlstellgröße in Abhängigkeit des Medienparameters vorgibt oder in einem zusätzlichen, z.B. über- oder nebengeordneten Regler oder einer Recheneinheit.

Bei allen möglichen Ausführungen kann die Erfindung vorsehen, dass diese durch ein System ausgebildet ist, bei dem der wenigstens eine Regler eingerichtet ist, das vorbeschriebene Verfahren durchzuführen.

Dieser wenigstens eine Regler kann grundsätzlich irgendwo im System angeordnet sein. Z.B. kann der wenigstens eine Regler in einer Baueinheit implementiert sein, die in einem Schaltschrank angeordnet ist. Es kann auch vorgesehen sein eine räumliche Nähe zur Pumpe zu erzielen, z.B. dadurch, dass der wenigstens eine Regler in einem Gehäuse in der Umgebung bzw. in der Nähe der Pumpe angeordnet ist. Ein solcher Regler kann z.B. auch einen Sensor umfassen, der Messwerte erfasst, die zur Regelung benötigt werden, z.B. einen Temperatursensor für die Medientemperatur auf der Primärseite oder einen Volumenstromsensor für die Messung des Volumenstroms auf der Primärseite. Insbesondere in solchen Fällen kann der wenigstens eine Regler in einem Gehäuse angeordnet sein, dass an einer Rohrleitung des Systems befestigbar ist. Der benannte Sensor kann z.B. innerhalb des Gehäuses des wenigstens einen Reglers angeordnet sein und innerhalb des Gehäuses durch eine Öffnung im Rohr oder in eine Tauchhülse im Rohr des Primärkreises in das Medium im Rohr eintauchen.

Eine weiterhin bevorzugte Ausführung kann vorsehen, dass zumindest die Regelelektronik der Medienparameter-Regelung, insbesondere die Temperaturregelung zur Vorgabe der Drehzahlstellgröße, vorzugsweise die gesamte Regelelektronik zur Durchführung des vorbeschriebenen Verfahrens, oder des nachfolgend anhand der Figuren konkretisierten Verfahrens in oder an der Pumpe im Primärkreislaufes, bevorzugt im oder am Gehäuse der Pumpe des Primärkreislaufes angeordnet wird / ist. Z.B. kann die Anordnung so sein, dass die Regelung vollständig in die Pumpenelektronik der Pumpe des Primärkreislaufes integriert ist. So wird erzielt, dass zur Ausbildung des Systems keine zusätzliche Regeleinheit zu einer Pumpenelektronik hinzukommen muss. Pumpenelektronik und Regeleinheit bilden somit eine gemeinsame Elektronikeinheit. Dies hat auch den Vorteil, dass in der Pumpe vorhandene Parameter, z.B. Betriebsparameter, direkt der Regelung zur Verfügung gestellt werden können, insbesondere somit nur über pumpeninterne Leitungs- oder Kommunikationswege.

Bevorzugte konkretisierte Ausführungsformen der Erfindung werden anhand der Figuren nachfolgend beschrieben. Dabei ist zu beachten, dass die Figuren direkt einige bevorzugte Weiterbildungen zeigen, die für die Erfindung nicht zwingend alle vorgesehen sein müssen, wie nachfolgend ausgeführt wird. Die Erfindung ist somit nicht auf die jeweiligen zeichnerischen Darstellungen in allen Details beschränkt, sondern diese zeigen lediglich den maximalen Grad der Konkretisierung der jeweiligen Ausführung.

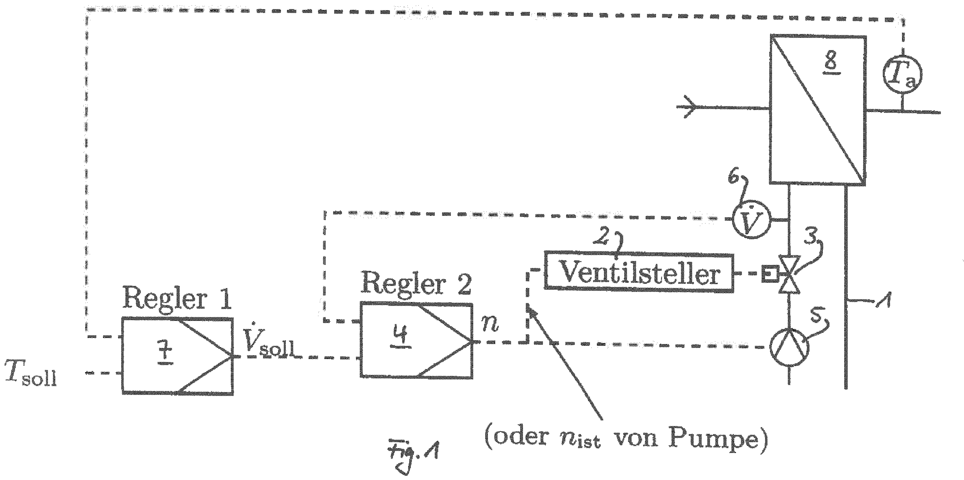

Die Figur 1 zeigt eine bevorzugte Ausführungsform der Erfindung bei der zwischen der Primärseite und der Sekundärseite eines Wärmeübertrages 8 Energie übertragen wird, z.B. vom Primärkreislauf 1 auf das Medium, wie z.B. Luft der Sekundärseite. Als Medienparameter wird auf der Sekundärseite die Ausgangstemperatur des Mediums nach dem Wärmeübertrager 8 erfasst und mit einer Soll-Temperatur im Regler 7 verglichen, der den nötigen Soll-Volumenstrom im Primärkreislauf 1 für den Regler 4 vorgibt, um die Temperaturdifferenz zu verringern. Es ist hier vorgesehen, dass im Primärkreislauf 1 als entgegenwirkende Änderung eines Betriebsparameters dessen hydraulischer Widerstand erhöht wird. Dies kann z.B. erfolgen mittels einer Ventilstellvorrichtung 2, mit welcher der Öffnungsquerschnitt eines im Primärkreislauf 1 angeordneten Drosselventils 3 verringert wird. Als Systemparameter wird die Pumpendrehzahl auf Unterschreiten oder Erreichen eines unteren Grenzwertes überwacht und bei Detektion der Unterschreitung oder des Erreichens die entgegenwirkende Änderung ausgelöst.

Senkt der Regler 4 die Drehzahl bei fallendem Bedarf an Wärmeübertrag im Wärmeübertrager 8 ab, so wird erfindungsgemäß das Unterschreiten oder Erreichen des unteren Drehzahlgrenzwertes erkannt und hiernach eine Verringerung des Querschnitts vom Drosselventil 3 ausgelöst, was einer weiteren Verringerung der Drehzahl entgegenwirkt.

Die Wirkung ist z.B. die, dass durch Verringerung des Öffnungsquerschnittes vom Drosselventil 3 der hydraulische Widerstand im Primärkreislauf 1 steigt, was einen erhöhten Druckverlust in der Regelstrecke bewirkt, wodurch der Volumenstrom verringert wird, was auch den Wärmeübertrag verringert. Es kann vorgesehen sein, dass die Pumpe immer eine Mindestdruckdifferenz erzeugt, wodurch bereits eine Drehzahlerhöhung resultiert.

Die Regelung bzw. der Regler 4 wird den Volumenstrom durch Drehzahländerung, insbesondere Erhöhung an der Pumpe 5 auf den vorgegebenen Sollwert regeln, insbesondere was den durch die Änderung bewirkten Verlust an Wärmeübertrag kompensiert. Dafür erhält der Regler 4 den Soll-Volumenstrom aus einem übergeordneten Regler 7, der in Abhängigkeit einer Soll-Temperatur des Mediums der Sekundärseite und dessen Ist-Temperatur diesen Soll-Volumenstrom dem Regler 4 vorgibt, wobei dieser im Regler 4 verglichen wird mit dem Ist-Volumenstrom, der z.B. im Primärkreislauf 1 gemessen wird mit einem Volumenstromsensor 6, alternativ der aus Pumpendaten ermittelt wird. Die Drehzahl der Pumpe nach der Änderung ist somit größer als vor der Änderung. Die Regelung kann somit mit einer weiteren Drehzahlreduzierung die Wärmeübertragung weiter verringern, verbleibt dabei aber wegen der Änderung des hydraulischen Widerstandes in einem gewünschten Drehzahl-Regelbereich.

Es kann in einer möglichen Ausführung auch direkt vor einer Änderung der Drosselventilstellung der Ist-Volumenstrom erfasst und als ein Sollwert übernommen werden, der vom Regler 4 nach der Änderung direkt durch Drehzahlvorgabe eingeregelt wird.

Vor und nach der Änderung wird zumindest im Wesentlichen somit derselbe Volumenstrom, aber bei verschiedenen Drehzahlen gefördert. Das Verfahren kann auch vorsehen, direkt eine neue Drehzahl vorzugeben, die einen Volumenstrom kleiner als der Volumenstrom vor der Änderung bewirkt, um so direkt dem fallenden Bedarf an Wärmeübertrag weiter nachzukommen.

Die Erfindung kann weiter bevorzugt in der Volumenstromregelung 4 des Primärkreislaufes 1, insbesondere die der Medienparameter-Regelung 7 des Mediums der Sekundärseite nachgeordnet ist, zur Erzielung eines Soll-Medienparameters des Mediums der Sekundärseite vorsehen, dass die Drehzahlstellgröße für die Pumpe 5 oder die Ist-Drehzahl der Pumpe 5 mit dem vorgegebenen unteren Drehzahlgrenzwert der Pumpe 5 verglichen wird, der z.B. im Regler 4 oder dem Ventilsteller 2 gespeichert sein kann. Der Vergleich kann z.B. im Ventilsteller 2 vorgenommen werden oder in einer anderen Einheit der Regelung. Es kann bevorzugt vorgesehen sein, dass bei einem Unterschreiten oder Erreichen des vorgegebenen unteren Drehzahlgrenzwertes mit der Ventilstellvorrichtung 2 der Öffnungsquerschnitt des Drosselventils 3 auf ein Maß kleiner als der Auslegungswert, z.B. der Maximalquerschnitt verringert wird, insbesondere um ein vorbestimmtes Maß, das z.B. gespeichert oder berechnet sein kann, z.B. um nach der Änderung der Drosselventilstellung eine Drehzahländerung in die Mitte des Drehzahlintervalls zwischen den Grenzwerten zu bewirken.

Gemäß den vorherigen allgemeinen Ausführungen kann die Erfindung in dieser Ausbildung weiterhin vorsehen, dass in der Volumenstromregelung des Primärkreislaufes 1 die Drehzahlstellgröße für die Pumpe 5 oder die Ist-Drehzahl der Pumpe 5 auch mit einem vorgegebenen oberen Drehzahlgrenzwert der Pumpe 5 verglichen wird und bei einem Überschreiten oder Erreichen des oberen Drehzahlgrenzwertes und einem gleichzeitig vorliegenden Öffnungsquerschnitt des Drosselventils kleiner als der Maximalquerschnitt mit der Ventilstellvorrichtung der Öffnungsquerschnitt des Drosselventils vergrößert wird, insbesondere um ein vorbestimmtes Maß, oder bei einem gleichzeitig vorliegenden Maximalquerschnitt des Drosselventils die Drehzahlstellgröße auf eine Drehzahl größer als der obere Drehzahlgrenzwert erhöht wird. Wenn also der Querschnitt des Drosselventils 3 nicht mehr vergrößerbar ist, muss der Bedarf an erhöhten Energieübertrag somit durch Drehzahlerhöhung über den oberen Drehzahlgrenzwert hinaus bedient werden. Der obere Drehzahlgrenzwert ist somit unter einer Maximaldrehzahl der Pumpe zu wählen, damit dies möglich ist.

Diese Ausführung kann also z.B. vorsehen, dass der Auslegungswert des Drosselventils 3 für den unbeeinflussten Primärkreislauf die vollständig geöffnete Stellung ist, von der aus eine Änderung nur in die eingangs genannte erste Richtung möglich ist. Die Auslegung kann selbstverständlich auch für eine querschnittsreduzierte Stellung des Drosselventils 3 erfolgen, was somit auch Änderungen ausgehend vom Auslegungswert in beide Richtungen ermöglicht.

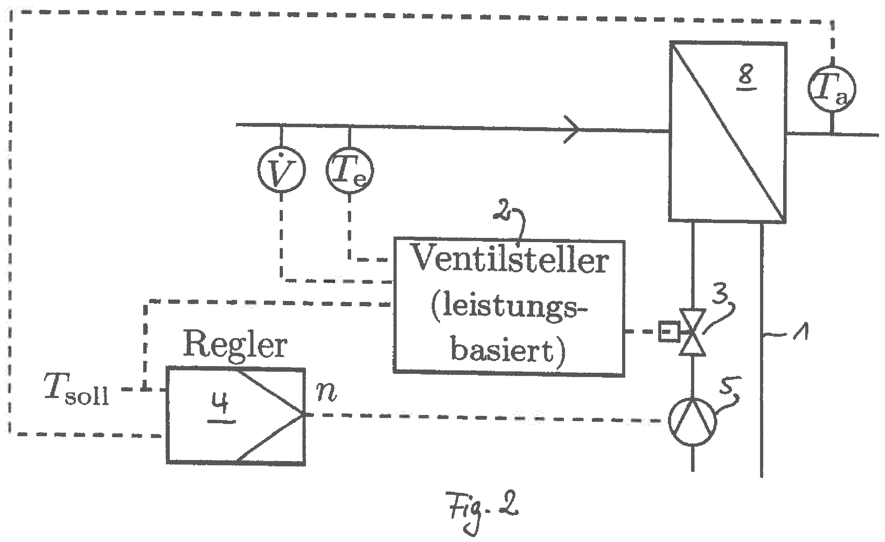

Die Figur 2 zeigt eine Ausführung, bei welcher ebenso als Betriebsparameter des Primärkreislaufes 1 mit einem Drosselventil 3 der hydraulische Widerstand beeinflusst wird. Als Medienparameter wird wiederum die Medientemperatur an der Ausgangsseite des Wärmeübertrages 8 beobachtet. Hier sieht die Erfindung ebenso vor, dass mit der Ventilstellvorrichtung 2 der Öffnungsquerschnitt des Drosselventils 3 als Betriebsparameter des Primärkreislaufes 1 geändert wird.

Bei dieser Ausführung erfolgt die Einstellung des Öffnungsquerschnittes des Drosselventils 3 faktisch in Abhängigkeit einer sekundär erfassten Leistungsanforderung, bevorzugt unabhängig von der Drehzahl-Stellgröße / Ist-Drehzahl. Die Leistungsanforderung kann z.B. ermittelt werden aus dem aktuellen sekundärseitigen Volumenstrom, der aktuellen sekundärseitigen Medientemperatur vor dem Wärmeübertrager 8 und der Soll-Temperatur nach dem Wärmeübertrager 8. Es erfolgt also nicht wie bei der Figur 1 ein Vergleich der Ist-Drehzahl mit dem Drehzahlgrenzwert.

In dieser Ausführung wird auf das Unterschreiten oder Erreichen eines unteren Leistungsanforderungsgrenzwertes geprüft und bei Feststellung der Unterschreitung oder Des Erreichens die entgegenwirkende Änderung des Betriebsparameters, hier die Erhöhung des hydraulischen Widerstandes ausgelöst.

So kann auch das Verhindern eines Unterschreitens eines unteren Drehzahlgrenzwertes oder das Erreichen der Minimaldrehzahl erfolgen.

Die Erfindung kann in einer bevorzugten Ausführung vorsehen, dass z.B. in der Ventilstellvorrichtung 2 die Drosselventilstellungen in Abhängigkeit der Leistungsanforderung gespeichert sind, z.B. als Tabelle oder als Funktion, insbesondere auf der Basis einer Auslegungsleistung des Wärmeübertragers 8.

Faktisch weiß das Regelsystem somit bei welcher Leistungsanforderung oder bei welchen mehreren Leistungsanforderungen in der Regelung jeweils der untere Drehzahlgrenzwert unterschritten oder die Minimaldrehzahl erreicht würde und kann dem durch, insbesondere wiederholte Verringerung des Querschnitts des Drosselventils 3 entgegensteuern.

Bevorzugt kann es bei allen gezeigten, wie auch nicht gezeigten Ausführungen, in denen ein Drosselventil zur Änderung des Betriebsparameters, hier des hydraulischen Widerstandes eingesetzt wird, insbesondere also bei den Ausführungen der Figuren 1 und 2 vorgesehen sein, dass das Drosselventil mit einer Ventilautorität kleiner als 0.3, bevorzugt kleiner als 0.2, weiter bevorzugt kleiner als 0.1 betrieben wird.

Diese vergleichsweise geringe Ventilautorität stellt auch klar, dass im Gegensatz zum Stand der Technik die Regelfunktion nicht überwiegend durch das Drosselventil wahrgenommen wird, sondern durch die Pumpe anhand der Drehzahländerung. Das Drosselventil ist hingegen, insbesondere überwiegend, dafür vorgesehen, die Pumpe in einem förderfähigen Drehzahlbereich über der Minimaldrehzahl, bzw. über dem unteren Drehzahlgrenzwert zu halten und weiter bevorzugt auch unter dem oberen Grenzwert zu halten.

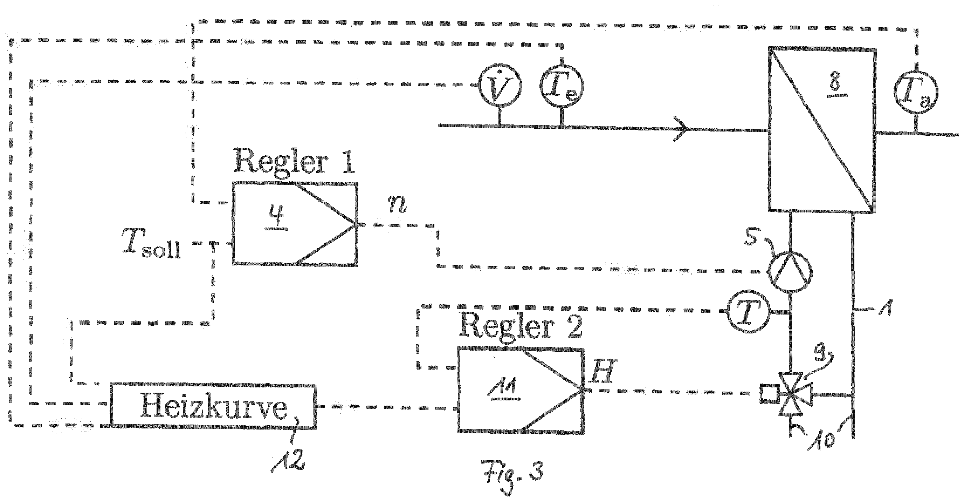

Die Ausführung der Figur 3 betrifft ebenso einen Wärmeübertrag im Wärmeübertrager 8 zwischen einem Wärmeübertragermedium im Primärkreislauf 1 und einem Medium der Sekundärseite, z.B. Luft. Ein erster Regelkreis ist mit dem Regler 4 ausgebildet.

Der Drehzahlregler 4 gibt bei dieser, wie auch allen anderen Ausführungen als Stellgröße die Drehzahl oder eine Größe, von der die Drehzahl abhängt, der Pumpe 5 vor. Als Soll-Ist-Abweichung wird im Regler 4 - wie auch bei der Figur 2 - die Temperaturdifferenz der Medienausgangstemperatur hinter dem Wärmeübertrager 8 und einer Solltemperatur verwendet.

Allgemein kann die Erfindung vorsehen, dass als entgegenwirkende Änderung eines Betriebsparameters die Temperatur des primärseitigen Wärmeträgermediums angepasst wird, insbesondere verringert wird. Eine Möglichkeit dies zu realisieren zeigt die Figur 3.

Hier ist im Primärkreislauf 1 ein Mischventil 9 angeordnet, mit dem die Zumischung eines Wärmeträgermediums aus einem Mischerkreis 10 zu dem Wärmeträgermedium des Primärkreises 1 in Abhängigkeit einer Stellgröße änderbar ist, insbesondere die Zumischungs als entgegenwirkende Änderung veränderbar, z.B. verringerbar ist. Je nachdem, ob ein Heiz- oder Kühlbetrieb gegeben sein soll und/oder ob das Temperaturniveau im Mischerkreis höher oder geringer ist als im Primärkreis, ist die Änderungsrichtung vorbestimmt, also vorbestimmt, ob für die die Erzielung der gegenwirkenden Änderung die Zumischung verringert oder erhöht werden muss.

Wird beispielsweise im Rahmen der Temperaturregelung vom Regler die Drehzahl der Pumpe abgesenkt, um einen fallenden Wärmebedarf zu berücksichtigen, so kann einem Absenken der Pumpendrehzahl bis zu einem unteren Drehzahlgrenzwert oder der Minimaldrehzahl dadurch entgegengewirkt werden, dass die Temperatur im Primärkreislauf 1 abgesenkt wird.

Dafür kann entweder die Zumischung eines Wärmeträgermediums aus dem Mischerkreis 10 zum Medium im Primärkreis 1 verringert werden, insbesondere wenn die Temperatur des Wärmeträgermediums im Mischerkreis 10 höher ist als die aktuelle Temperatur des Mediums im Primärkreis 1 oder die Zumischung kann erhöht werden, insbesondere wenn die Temperatur des Wärmeträgermediums im Mischerkreis 10 höher ist als die aktuelle Temperatur des Mediums im Primärkreis 1. Beide Fälle führen zu einem Absenken der Temperatur im Primärkreis, was dem Absenken der Drehzahl entgegenwirkt.

Grundsätzlich könnte bei einer solchen Implementierung auch ein Vergleich zwischen der Ist-Drehzahl der Pumpe 5 und einem unteren Drehzahlgrenzwert erfolgen, um eine Entgegenwirkung auszulösen, z.B. bei Erreichen des Drehzahlgrenzwertes die Temperatur des Wärmeträgermediums im Primärkreis durch Änderung der Zumischung im Mischerventil 9 zu ändern, insbesondere z.B. bei einer Heizanwendung zu verringern und so die Temperatur bzw. den Energieinhalt im Primärkreis zu ändern, was den Wärmeübertrag verringert.

In der gezeigten Ausführung der Figur 3 hingegen ist es vorgesehen, dass in einer der Medienparameter-Regelung, insbesondere Temperaturregelung des Mediums der Sekundärseite nebengeordneten / parallel angeordneten Temperaturregelung der Temperatur des Wärmeträgermediums des Primärkreises mit dem Regler 11 die Mischventilstellgröße in Abhängigkeit einer von einer gespeicherten Heizkurve 12 vorgegebenen Soll-Temperatur ermittelt wird. Diese wird im Regler 11 mit der im Primärkreis erfassten Ist-Temperatur verglichen.

Bevorzugt kann mit der Heizkurve 12 die Solltemperatur der primärseitigen Temperaturregelung 11 in Abhängigkeit der sekundärseitigen Leistungsanforderung vorgegeben werden, insbesondere, wobei - wie hier visualisiert - die Leistungsanforderung ermittelt wird aus dem aktuellen sekundärseitigen Volumenstrom, der aktuellen sekundärseitigen Medientemperatur vor dem Wärmeübertrager und der Soll-Temperatur nach dem Wärmeübertrager 8.

Wie bei Figur 2 weiß das Regelsystem faktisch somit über die Heizkurve, bei welcher Leistungsanforderung oder bei welchen mehreren Leistungsanforderungen in der Regelung jeweils ein unteren Drehzahlgrenzwert unterschritten oder die Minimaldrehzahl erreicht würde und kann dem durch Änderung des Temperatursollwertes im Primärkreis entgegenwirken, insbesondere was durch einfache oder wiederholte Änderung des Zumischverhältnisses am Mischventil 9 umgesetzt wird. In der Heizkurve ist somit faktisch mindestens ein Grenzwert der Leistungsanforderung gespeichert, ab dem die Änderung erfolgt. Durch Abfragen der Heizkurve und Ermittlung des tabellarisch oder funktional zugeordneten Temperaturwertes oder Zumischverhältnisses erfolgt somit die Prüfung auf Grenzwertunterschreitung und/oder Überschreitung.

Die Erfindung kann allgemein vorsehen, von einer Heizkurve mit der gemäß einer vorgelagerten Kalibrierung die Abhängigkeit der Wärmeübertragerleistung von der Drehzahl der Primärkreispumpe, insbesondere auch von der Temperatur des sekundärseitigen Mediums vor dem Wärmeübertrager und/oder dem Volumenstrom des sekundärseitigen Mediums als Funktion beschrieben wird, die inverse Funktion 13 zu bilden und diese inverse Funktion 13 zur Linearisierung dem Regler 4 nachzuschalten, mit dem die Drehzahlstellgröße der Primärkreispumpe 5 ermittelt wird.

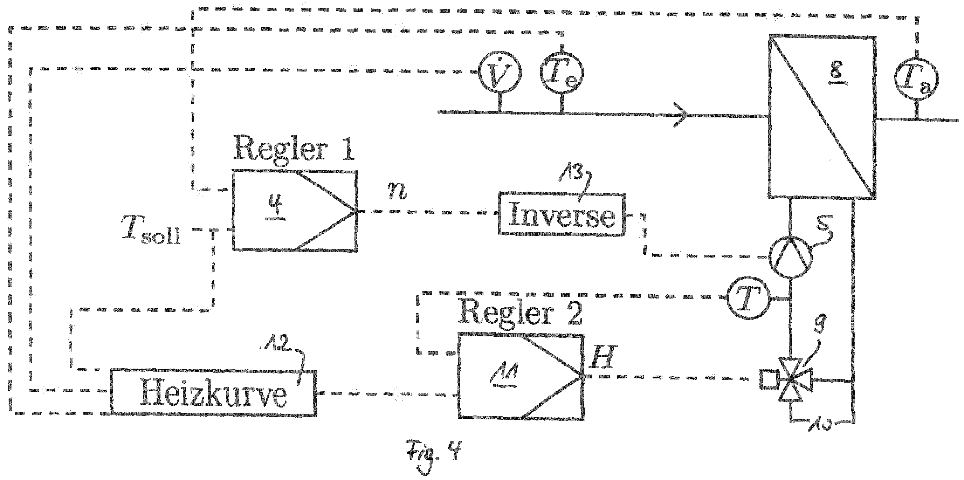

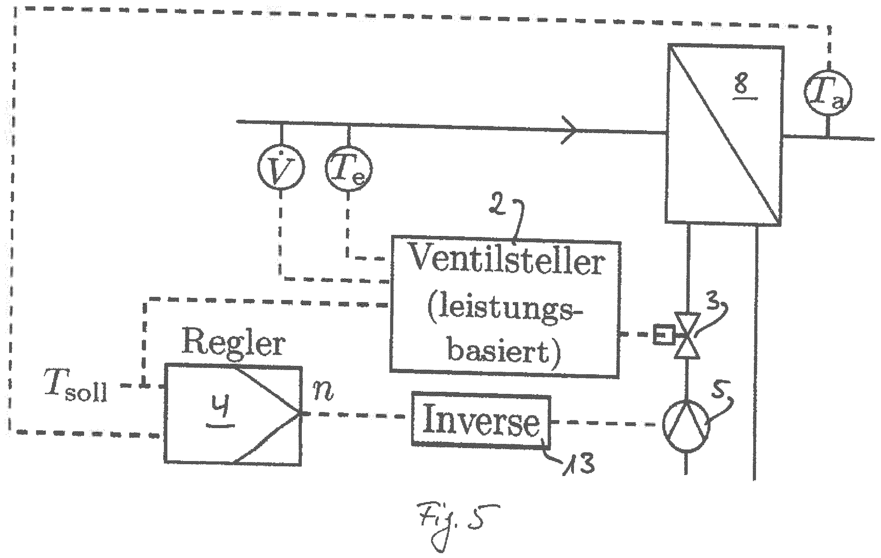

Die Figur 4 zeigt diese Ausführung für die zuvor beschriebene Variante der Figur 3 und die Figur 5 zeigt dies für die zuvor beschriebene Variante der Figur 2, insbesondere bei welcher die Heizkurve selbst nicht zum Einsatz kommt.

## Patentansprüche

1. Verfahren zur Regelung eines Medienparameters, insbesondere der Temperatur des Mediums auf der Sekundärseite eines Wärmeübertragers (8), bei dem mit einer Pumpe (5) in einem Primärkreislauf (1) des Wärmeübertragers (8) ein Wärmeträgermedium durch den Wärmeübertrager (8) gefördert und mit diesem das Medium der Sekundärseite temperiert wird, wobei die Medienparameter-Regelung mittels einer Änderung der Drehzahl der Pumpe (5) als Stellgröße der Regelung erfolgt, **dadurch gekennzeichnet, dass** beim Unterschreiten oder Erreichen eines vorgegebenen unteren Grenzwertes bei einer Absenkung der Drehzahl der Pumpe (5) eine der Absenkung entgegenwirkende Änderung eines Betriebsparameters des Primärkreislaufes (1) ausgelöst wird, insbesondere mit der eine Absenkung der Pumpendrehzahl bis zu einer Minimaldrehzahl verhindert wird.

2. Verfahren nach Anspruch 1, **dadurch gekennzeichnet, dass** beim Überschreiten oder Erreichen eines vorgegebenen oberen Grenzwertes bei einer Anhebung der Drehzahl der Pumpe (5) eine der Anhebung entgegenwirkende Änderung des Betriebsparameters ausgelöst wird, insbesondere wobei zunächst zur Bedienung eines steigenden Bedarfes an Wärmeübertrag im Wärmeübertrager (8) nach wenigstens einer zuvor vorgenommenen Änderung des Betriebsparameters die Drehzahl der Pumpe (5) durch den Regler (4) angehoben wird, bevorzugt wobei wenigstens eine vorherige Änderung des Betriebsparameters durch eine entgegengesetzte Änderung rückgängig gemacht wird.

3. Verfahren nach einem der vorherigen Ansprüche, **dadurch gekennzeichnet, dass**
a. als unterer Grenzwert ein unterer Drehzahlgrenzwert überwacht wird, insbesondere der größer ist als eine Minimaldrehzahl der Pumpe und als oberer Grenzwert ein oberer Drehzahlgrenzwert überwacht wird, insbesondere der kleiner ist als eine Maximaldrehzahl der Pumpe oder
b. als unterer Grenzwert ein Differenzwert zwischen der aktuellen Pumpendrehzahl und einem nach unten nicht zu unterschreitenden Drehzahlgrenzwert und als oberer Grenzwert ein Differenzwert zwischen der aktuellen Pumpendrehzahl und einem nach oben nicht zu überschreitenden Drehzahlgrenzwert überwacht wird oder
c. als unterer Grenzwert ein unterer Leistungsanforderungswert und als oberer Grenzwert ein oberer Leistungsanforderungswert überwacht wird.

4. Verfahren nach einem der vorherigen Ansprüche, **dadurch gekennzeichnet, dass** die Änderung des Betriebsparameters um einen vorbestimmten Wert vorgenommen wird, insbesondere der im Regler (4) gespeichert ist oder vor der Änderung berechnet wird.

5. Verfahren nach einem der vorherigen Ansprüche, **dadurch gekennzeichnet, dass** in Abhängigkeit der vorgenommenen oder vorzunehmenden Änderung des Betriebsparameters, die damit einhergehende Änderung des Energieübertrags im Wärmeübertrager (8) berechnet wird und direkt eine Drehzahlstellgröße für eine Drehzahl vorausberechnet, von einem Regler (4) eingestellt und an die Pumpe (5) übermittelt wird, mit der die Änderung des Energieübertrags reduziert, bevorzugt zumindest theoretisch kompensiert wird.

6. Verfahren nach einem der vorherigen Ansprüche, **dadurch gekennzeichnet, dass** im Primärkreislauf (1) als entgegenwirkende Änderung eines Betriebsparameters dessen hydraulischer Widerstand geändert, insbesondere erhöht wird, bevorzugt mittels einer Ventilstellvorrichtung (2) der Öffnungsquerschnitt eines im Primärkreislauf angeordneten Drosselventils (3) geändert, insbesondere verringert wird, vorzugsweise wobei das Drosselventil (3) mit einer Ventilautorität kleiner als 0.3, bevorzugt kleiner als 0.2, weiter bevorzugt kleiner als 0.1 betrieben wird.

7. Verfahren nach einem der vorherigen Ansprüche 1 bis 6, **dadurch gekennzeichnet, dass** in einer Volumenstromregelung, insbesondere einer der Medienparameter-Regelung des Mediums der Sekundärseite nachgeordneten Volumenstromregelung des Primärkreislaufes zur Erzielung eines Soll-Medienparameters des Mediums der Sekundärseite die Drehzahlstellgröße für die Pumpe (5) oder die Ist-Drehzahl der Pumpe (5) mit dem vorgegebenen unteren Drehzahlgrenzwert der Pumpe (5) verglichen wird und bei einem Unterschreiten des vorgegebenen unteren Drehzahlgrenzwertes mit der Ventilstellvorrichtung (2) der Öffnungsquerschnitt des Drosselventils (3) auf ein Maß kleiner als der Maximalquerschnitt verringert wird, insbesondere um ein vorbestimmtes Maß.

8. Verfahren nach Anspruch 7, **dadurch gekennzeichnet, dass** in der Volumenstromregelung des Primärkreislaufes die Drehzahlstellgröße für die Pumpe (5) oder die Ist-Drehzahl der Pumpe (5) mit dem vorgegebenen oberen Drehzahlgrenzwert der Pumpe (5) verglichen wird und bei einem Überschreiten des oberen Drehzahlgrenzwertes und
a. einem gleichzeitig vorliegenden Öffnungsquerschnitt des Drosselventils (3) kleiner als der Maximalquerschnitt mit der Ventilstellvorrichtung (2) der Öffnungsquerschnitt des Drosselventils (3) vergrößert wird, insbesondere um ein vorbestimmtes Maß, oder
b. bei einem gleichzeitig vorliegenden Maximalquerschnitt des Drosselventils (3) die Drehzahlstellgröße auf eine Drehzahl größer als der obere Drehzahlgrenzwert erhöht wird.

9. Verfahren nach einem der vorherigen Ansprüche 6 bis 8, **dadurch gekennzeichnet, dass** mit der Ventilstellvorrichtung (2) der Öffnungsquerschnitt des Drosselventils (3) in Abhängigkeit einer sekundär erfassten Leistungsanforderung geändert wird, insbesondere bei Unterschreiten des unteren Leistungsanforderungsgrenzwertes der Öffnungsquerschnitt verringert wird und/oder bei Überschreiten des oberen Leistungsanforderungsgrenzwertes der Öffnungsquerschnitt vergrößert wird, bevorzugt unabhängig von der Drehzahl-Stellgröße / Ist-Drehzahl, bevorzugt wobei die Leistungsanforderung ermittelt wird aus dem aktuellen sekundärseitigen Volumenstrom, der aktuellen sekundärseitigen Medientemperatur vor dem Wärmeübertrager und der Soll-Temperatur nach dem Wärmeübertrager (8), vorzugsweise wobei in der Ventilstellvorrichtung (2) die Drosselventilstellungen in Abhängigkeit der Leistungsanforderung gespeichert sind als Tabelle oder als Funktion, insbesondere auf der Basis einer Auslegungsleistung des Wärmeübertragers (8).

10. Verfahren nach einem der vorherigen Ansprüche 1 bis 5, **dadurch gekennzeichnet, dass** im Primärkreislauf (1) als entgegenwirkende Änderung eines Betriebsparameters die Temperatur des primärseitigen Wärmeträgermediums (8) angepasst wird, insbesondere verringert wird.

11. Verfahren nach Anspruch 10, **dadurch gekennzeichnet, dass** im Primärkreislauf (1) ein Mischventil (9) angeordnet ist, mit dem die Zumischung eines Wärmeträgermediums aus einem Mischerkreis (10) zu dem Wärmeträgermedium des Primärkreises (1) in Abhängigkeit einer Stellgröße änderbar ist, insbesondere die Zumischung als entgegenwirkende Änderung änderbar, bevorzugt verringerbar oder erhöhbar ist.

12. Verfahren nach Anspruch 11, **dadurch gekennzeichnet, dass** in einer der Medienparameter-Regelung, insbesondere Temperaturregelung des Mediums der Sekundärseite nebengeordneten / parallel angeordneten Temperaturregelung (11) der Temperatur des Wärmeträgermediums des Primärkreises (1) die Mischventilstellgröße in Abhängigkeit einer von einer gespeicherten Heizkurve (12) vorgegebenen Soll-Temperatur ermittelt wird, vorzugsweise wobei mit der Heizkurve (12) die Solltemperatur der primärseitigen Temperaturregelung (11) in Abhängigkeit der sekundärseitigen Leistungsanforderung vorgegeben wird, insbesondere, wobei die Leistungsanforderung ermittelt wird aus dem aktuellen sekundärseitigen Volumenstrom, der aktuellen sekundärseitigen Medientemperatur vor dem Wärmeübertrager und der Soll-Temperatur nach dem Wärmeübertrager (8).

13. Verfahren nach einem der vorherigen Ansprüche, **dadurch gekennzeichnet, dass** von einer Heizkurve (12) mit der gemäß einer vorgelagerten Kalibrierung die Abhängigkeit der Wärmeübertragerleistung von der Drehzahl der Primärkreispumpe (5), insbesondere auch von der Temperatur des sekundärseitigen Mediums vor dem Wärmeübertrager (8) und/oder dem Volumenstrom des sekundärseitigen Mediums als Funktion beschrieben wird, die inverse Funktion (13) gebildet wird und zur Linearisierung dem Regler (4) nachgeschaltet wird, mit dem die Drehzahlstellgröße der Primärkreispumpe (5) ermittelt wird.

14. Verfahren nach einem der vorherigen Ansprüche, **dadurch gekennzeichnet, dass** zumindest die Regelelektronik der Medienparameter-Regelung, insbesondere Temperaturregelung (4) zur Vorgabe der Drehzahlstellgröße, vorzugsweise die gesamte Regelelektronik zur Durchführung des Verfahrens nach einem der vorherigen Ansprüche im oder am Gehäuse der Pumpe (5) des Primärkreislaufes angeordnet ist, insbesondere vollständig in die Pumpenelektronik der Pumpe (5) des Primärkreislaufes (1) integriert ist.

15. System zur Regelung eines Medienparameters des sekundärseitigen Mediums eines Wärmeübertragers (8), insbesondere Luft, umfassend einen von einem Sekundärmedium durchströmten Wärmeübertrager (8) mit einem Primärkreislauf (1), in welchem mit einer Pumpe (5) ein primärseitiges Wärmeträgermedium durch den Wärmeübertrager (8) förderbar ist, wobei für die Medienparameter-Regelung wenigstens eine Regeleinheit (4, 7, 11) vorgesehen ist, die eingerichtet ist das Verfahren nach einem der vorherigen Ansprüche auszuführen, bevorzugt, wobei die Regeleinheit in oder am Gehäuse der Pumpe (5) angeordnet ist.
